(19) Europäisches Patentamt / European Patent Office / Office européen des brevets

(11) **EP 2 030 868 B1**

(12) **EUROPEAN PATENT SPECIFICATION**

(45) Date of publication and mention
of the grant of the patent:
**10.08.2016 Bulletin 2016/32**

(51) Int Cl.:
***B62D 5/04*** (2006.01)

(21) Application number: **07115063.5**

(22) Date of filing: **28.08.2007**

(54) **Method for operating an electric power steering system, electronic control unit for an electric power steering system and electric power steering system**

Verfahren zum Betrieb einer elektrischen Servolenkung, elektrische Steuereinheit für eine elektrische Servolenkung und elektrisches Servolenkungssystem

Procédé de commande d'une direction assistée électrique, unité de commande électronique pour une direction assistée électrique et système de direction assistée électrique

(84) Designated Contracting States:
**DE FR GB**

(43) Date of publication of application:
**04.03.2009 Bulletin 2009/10**

(73) Proprietor: **Ford Global Technologies, LLC
Dearborn, MI 48126 (US)**

(72) Inventor: **Shah, Jintendra
52072 Aachen (DE)**

(74) Representative: **Illing, Rolf et al
Ford-Werke GmbH
Patentabteilung NH-364
Henry-Ford-Straße 1
50735 Köln (DE)**

(56) References cited:
**EP-A- 1 574 417      EP-A- 1 857 349
DE-A1- 4 133 238      DE-A1- 10 119 967
DE-A1- 19 906 300     US-A- 6 134 490**

**Description**

The present invention relates to a method for operating an electric power steering system, an electronic control unit for an electric power steering system and an electric power steering system.

Electric power assisted steering (EPAS) systems are used to add a boosting torque to the torque that the driver applies manually on the steering wheel by means of an electric motor, which applies assist torque to the steering system. The torque applied by the electric motor largely corresponds to the actual steering torque to a steering mechanism, when a driver steers the steering wheel. As a result, even large steering systems that are difficult to move and which are connected to large inertia masses can be moved by the driver with relatively little manual application of force.

The electric power assisted steering system includes an electronic control unit (ECU) for controlling the applied voltage (motor drive voltage) and/or electric current to the electric motor. The ECU includes a central processing unit (CPU) and a motor driving device, wherein the CPU sends signals to the motor driving device to control the voltage and/or the current applied to the electric motor.

A torque sensor provides torque signals from a steering shaft, which connects the steering wheel with a steering rack for applying steering forces to the tires of a vehicle. Based on the torque sensor signals, the ECU computes the assist torque to be provided by the electric motor. For the computation of the assist torque an algorithm is implemented in the CPU to ensure proper assistance without overriding the driver's need for road feedback, which feedback is transmitted by feedback forces to the steering wheel.

A general aim of EPAS systems is to provide a stable steering feedback for the driver by damping the feedback forces caused by road conditions and/or related vehicle dynamics without generating a friction feeling due to overdamping.

US 6,742,620 B2 discloses a power steering system in which an electric motor makes available a damping torque to a steering system via a mechanical transmission. The transmission is arranged between the steering wheel and a steering rack. The electric motor is actuated by a control unit in accordance with the steering torque sensed by a sensor and the vehicle speed sensed by a sensor. In addition, a damping module of the control unit receives binary or continuous signals relating to the braking state, in particular relating to the brake activation and to cornering. By means of these signals the damping torque which is generated by the electric motor can be adapted in such a way that vibrations which are caused by unequal wear of the brakes in the steering system are reduced.

US 6,134,490 discloses a method to control a motor assisted vehicle steering device by a steering signal formulated by a digital computer. The steering signal is formulated so that a high and quick power-assist is obtained when the steering is steep or sharp, while trembling vibrations appearing on a steering wheel due to noise are suppressed when the steering is slow or the steering wheel is stably held. To achieve these goals a steering velocity calculated from a steering angle and a steering torque signal detected from a torsion of a steering shaft is used to formulate the steering signal. An original steering torque signal is modified by a transfer function having a higher gain and a higher phase advance in a certain frequency range thereof, thereby formulating a final steering signal which controls operation of the power-assist motor.

DE 199 06 300 A1 is directed to a method that involves measuring the steering torque or torques applied to the steered wheel or wheels by an electrical servomotor, wherein a detection step detects whether the steering torque varies periodically depending on the revolution rate of the steered wheels. An evaluation step generates a signal representing an imbalance on the two steered wheels or on a relevant steered wheel if the result of the detection step is positive. As a result of this method, a synthetic vibration is generated at the steering-wheel-simulator to provide a force feedback for the driver, that simulates the behaviour of a standard steering system if at least one front wheel is being unbalanced.

EP 2 028 080 A1, which is state of the art according to Article 54(3) EPC, discloses a method for operating an electric power steering system having an electronic control unit for controlling of an electric power applied to an electric motor, which electric motor generates assist torque for assisting steering of a steering wheel, said assist torque being computed by means of an algorithm, which algorithm comprises the steps of: determination of a steering torque signal related to internal and/or external forces acting on the electric power steering system, determination of a vehicle velocity, determination of a steering wheel angle, computation of a disturbance torque, with the input signals: vehicle velocity signal and modified disturbance force signal, which is computed from the steering torque signal being filtered by a highpass-filter, having a lower cut-off frequency of 9 Hz. In parallel to the said determination step there is performed a step of provision of the vehicle velocity and the steering torque and possibly a steering angle to classification means for the determination of an index which is used for at least partial compensation of the external forces by application of electric power to the electric motor in accordance with the calculated disturbance torque and said index.

EP 2 014 5378 A2, which is state of the art according to Article 54(3) EPC, discloses a method for operating an electric power steering system having an electronic control unit for controlling of an electric power applied to an electric motor, which electric motor generates assist torque for assisting steering of a steering wheel, said assist torque being computed by means of an conventional algorithm based on steering torque, vehicle velocity and steering wheel angle. In parallel with and independently of the conventional assist control operation a control operation for suppressing gear rattle noise is performed. In this operation, a frequency of the steering torque is determined, and if this frequency is greater than a reference frequency of 10 Hz, for example, an operation to suppress gear rattle noise is started by driving the electric motor in the opposite direction to the present steering direction. This would cause a partial compensation of the internal forces induced by the driver.

The EPAS system known from the prior art deals with the damping during brake activation and cornering. Several signal inputs are needed to compute the level of damping and to provide electric power to the electric motor related to the damping needs during braking, but other driving situations are not covered by the known damping algorithm.

The object of the present invention is to provide an improved method for operating an electric power steering system that covers the phenomenon of nibble with a low computational effort. It is another objective of the invention to provide an electronic control unit for an electric power steering system implementing such an algorithm and an electric power steering system implementing such an electronic control unit.

To achieve the above mentioned object, the invention provides a method for operating an electric power steering system as defined in claim 1.

The nature of the first order nibble is a harmonic (sinusoidal) vibrations disturbance with high frequency felt directly on the steering wheel. This disturbance is noticed as steering system error state and generally happens when the vehicle cruises between 100 and 120 kph. The cause of this disturbance is the net unbalance on front wheels.

The external/internal forces caused by the nibble phenomenon may be detected by means of a torque sensor being installed at the steering shaft or by means of at least one force sensor mounted at the steering rack, which sensor provides an disturbance force signal representing the actual amount of external/internal forces acting on the steering system.

The signal of the torque sensor or force sensor may be analyzed by means of a analogue-digital-converter to provide a digital signal to the algorithm, wherein a sample frequency fs preferably is chosen as twice as high as the highest frequency of the disturbance force signal. An analogue processing of the signal is also feasible.

However, with respect to the limited capacity of the ECU, some regions of the signal, which are not relevant for purposes of compensation and/or unbalance amount determination, are masked out to avoid unnecessary signal computation.

According to a preferred embodiment of the invention, the disturbance force signal determined by the torque or force sensor is filtered by filter means having a lower cut-off frequency of at least 8 Hz, in particular at least 10 Hz. The lower cut-off frequency of the filter is chosen to allow the passage of disturbance force signals of interest, whereas signals with lower frequencies, which are related to driver's inputs into the steering system are masked out. Typical frequencies for the nibble phenomenon are in a range between 11 Hz and 22 Hz, whereas the normal driver steering input is in a range between 0 Hz and 4 Hz.

According to another preferred embodiment of the invention, the vehicle velocity signal is filtered by digital filter means, preferably a digital bandpass filter, in particular a digital highpass-filter, having a lower cut-off limitation corresponding to 60 to 135 kilometres per hour and providing a logical output signal. The nibble phenomenon is related to the velocity of the vehicle and does not occur in a velocity range below 60 km/h. If a vibration occurs in the velocity range below 60 km/h, this may be related to other reasons or severe incidents, hence it is necessary to give a feedback to the driver in this case. In contrast, the nibble phenomenon is related to small unbalances of the front wheels and does not cause severe problems even if it occurs in a longer term. Therefore a limitation to vibrations occurring in a velocity range above 60 km/h covers the nibble phenomenon and allows using the resources of the ECU in the lower velocity range for other computational applications, which applications are not in the focus of this invention. The digital filter provides a logical "high" signal, in particular a logical "1", if the velocity is above a lower threshold value and in particular above a higher threshold value, otherwise the digital filter provides a logical "low" signal, in particular a logical "0".

According to another preferred embodiment of the invention, the steering wheel angle is filtered by digital filter means, preferably a digital lowpass-filter, having an upper cut-off limitation corresponding to 10 - 20 degrees and providing a logical output signal. The nibble phenomenon to be compensated by the EPAS system is related to minor unbalances of the wheels and occurs during straightforward cruise of the vehicle. Other vibration phenomena occurring during cornering of the vehicle are not in the focus of the desired compensation of the nibble phenomenon and even may be related to circumstances, which are relevant for the safety of the vehicle, e.g. low tire pressure, etc.. For this reason, the detection and compensation of the nibble phenomenon is restricted to a small steering wheel angle representing straightforward cruise of the vehicle. The digital filter provides a logical "high" signal, in particular a logical "1", if the steering wheel angle is below the threshold value, otherwise the digital filter provides a logical "low" signal, in particular a logical "0".

According to another preferred embodiment of the invention, the filtered disturbance force signal is provided to averaging means to compute an averaged disturbance force signal, which averaging means using the equation:

$$y(n) = \frac{1}{m} \sum_{k=0}^{k=m-1} x(n-k)$$

where m is the size of the moving average filter; n is the signal index; k is the counter; x is the input signal and y is the output signal. Hence, x represents the sample of the measured disturbance force signal whereas y represents the averaged disturbance force signal. With such moving average filter, the average of the disturbance force signal amplitudes within a sample size of m is determined. Hence moving average only takes into account the m latest disturbance force signal amplitudes. This ensures a stable input for a succeeding classification lookup-table or algorithm and reduces computation for the determination of the compensation torque.

According to another preferred embodiment of the invention, the filtered disturbance force signal is provided to the averaging means after passing absolute value generating means. Since the nibble phenomenon is a harmonic sinusoidal oscillation, the external force, in particular the torque, measured in the EPAS system can be roughly approximated with a sequence of negative and positive force values or torque values. To compute an appropriate level of compensation for the nibble phenomenon, the averaging means are only provided with positive values by the absolute value generator that outputs the absolute value of the force values or torque values.

According to another preferred embodiment of the invention, the power of the disturbance force signal, in particular the power of the filtered disturbance force signal, is determined.

According to another preferred embodiment of the invention, the equation:

$$P_{Tcol} = \frac{1}{\tau} \int_0^\tau x^2 dt$$

is used for the determination of the power of the disturbance force signal, in particular the power of the filtered disturbance force signal, wherein $\tau$ is a predetermined timeframe. By integration of the incremental samples of the disturbance force signal within the predetermined timeframe T , a reduction of the information density can be achieved, since the result of the integration, the power $P_{Tcol}$ of the disturbance force signal, is one value representing all samples of the disturbance force signal occurring in the timeframe $\tau$. The timeframe $\tau$ is chosen with respect to the sample rate of the disturbance force signal and with respect to the frequency range of the oscillation frequency of the disturbance force signal. A typical value for $\tau$ is 1 second.

According to another preferred embodiment of the invention, the timeframe $\tau$ is determined by the period of an oscillation, in particular by the period of a square-wave oscillation, generated by means of a signal generator. The oscillation triggers the integration, in particular an increasing or decreasing slope of the oscillation serves as trigger for the integration. The oscillation provided by a signal generator allows an accurate determination of the timeframe $\tau$, hence the result of the integration also fulfils high accuracy needs.

According to another preferred embodiment of the invention, the computed power of the disturbance force signal is provided to a zero-order-hold algorithm, in particular serving as a digital-analogue-converter. The zero-order-hold algorithm converts the discrete-time signal into a continuous-time signal by holding each sample of the disturbance force signal for one sample interval.

According to another preferred embodiment of the invention, an input signal for an unbalance-amount look-up table or unbalance-amount algorithm is computed by multiplication of the output of the digital filter for the vehicle velocity, the output of the digital filter for the steering wheel angle and the averaged disturbance force signal according to one of the claims 5 to 7 or the power of the disturbance force signal according to one of the claims 8 or 9. By multiplying the averaged force signal or the power of the disturbance force signal with the logical outputs of the filter means for the vehicle velocity signal and the steering wheel angle signal it is assured, that a computation or determination of an unbalance amount is solely executed, if the velocity is above the preset threshold and the steering wheel angle is below the preset threshold and hence the result of the computation is relevant for the nibble phenomenon. In any other case, the unbalance-amount lookup table or unbalance amount algorithm provides no unbalance amount, since the disturbance is not assumed to be the result of a nibble phenomenon.

According to another preferred embodiment of the invention, an input signal for an unbalance-amount look-up table or unbalance-amount algorithm is computed by multiplication of the output of the digital filter for the vehicle velocity, the output of the digital filter for the steering wheel angle and the power of the disturbance force signal and dividing the result with $\tau$.

According to another aspect of the invention, an electronic control unit for an electric power steering system is provided, which electronic control unit is programmed to execute the method according to one of the claims 1 to 12.

According to another aspect of the invention, an electric power steering system comprising an electronic control unit according to claim 13. is provided.

Other features and advantages of the present invention will be readily appreciated and better understood after reading the subsequent description when considered in connection with the accompanying drawings.

Fig. 1    is a schematic drawing of an electric assisted power steering apparatus according to the invention,

Fig. 2 is a flow chart illustrating the basic function blocks of the method accord-ing to a first embodiment of the invention,

Fig. 3 is a flow chart illustrating the basic function blocks of the method according to a second embodiment of the invention,

Fig. 4 is a flow chart illustrating the basic function blocks of the method according to a third embodiment of the invention.

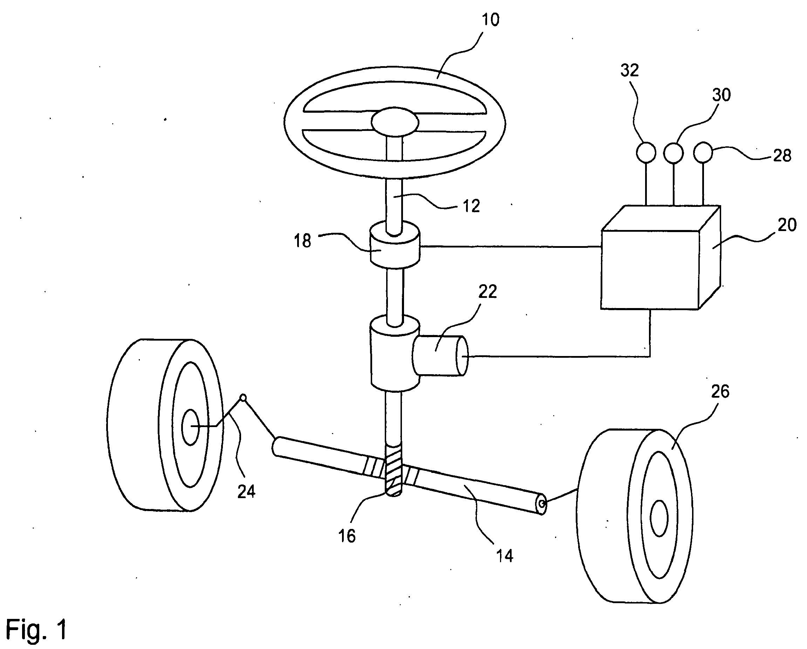

The electric power assisted steering system according to Fig. 1 includes a steering wheel 10 to be operated by a driver, a steering shaft 12 joining the steering wheel 10 with a steering rack 14. The steering rack 14 meshes with a pinion 16, which pinion 16 is connected to the steering shaft 12. A torque sensor 18 is attached to the steering shaft 12 to detect torsion of the steering shaft 12 corresponding proportionally to the steering torque at the steering wheel 10. The torque sensor 18 is electrically connected to ECU 20, which ECU 20 analyzes the signals of the torque sensor 18 an computes an assist torque. The assist torque is translated into an electric current, which current is provided to an electric motor 22. The electric motor 22 is coupled to the steering shaft 12 and is capable of providing an assist torque to the steering shaft 12. The torque in the steering shaft 12 generates by meshing of the pinion 16 axial forces in the direction of the longest extension of the steering rack 14. The steering rack 14 is coupled to steering knuckles 24, which steering knuckles 24 are rotatably mounted at a car body (not shown). The steering knuckles 24 serve as axles for the wheels 26, which wheels 26 can be rotated by a linear movement of the steering rack 14 to allow the steering of the vehicle.

Additional sensors like a velocity sensor 28, a steering wheel angle sensor 30 and a brake sensor 32 provide their signals to the ECU 20. Hence, the ECU 20 is enabled to compute the assist torque and the amount of electric power to be provided to the electric motor 22 dependent on the signal of the torque sensor 18 and at least one signal of the additional sensors 28, 30, 32.

The torque at the torque sensor 18 is related to internal and external forces and torques applied to the steering system. If the driver turns the steering wheel, the wheels 26 provide a reaction force, which reaction force results in a feedback force to the driver. Some reaction forces are needed to ensure a proper feeling for the driver. Other reaction forces, e.g. reaction forces related to unbalanced tires or uneven brake disc surfaces, do not give any useful information to the driver and therefore shall be eliminated or at least partially compensated to improve the drivers comfort.

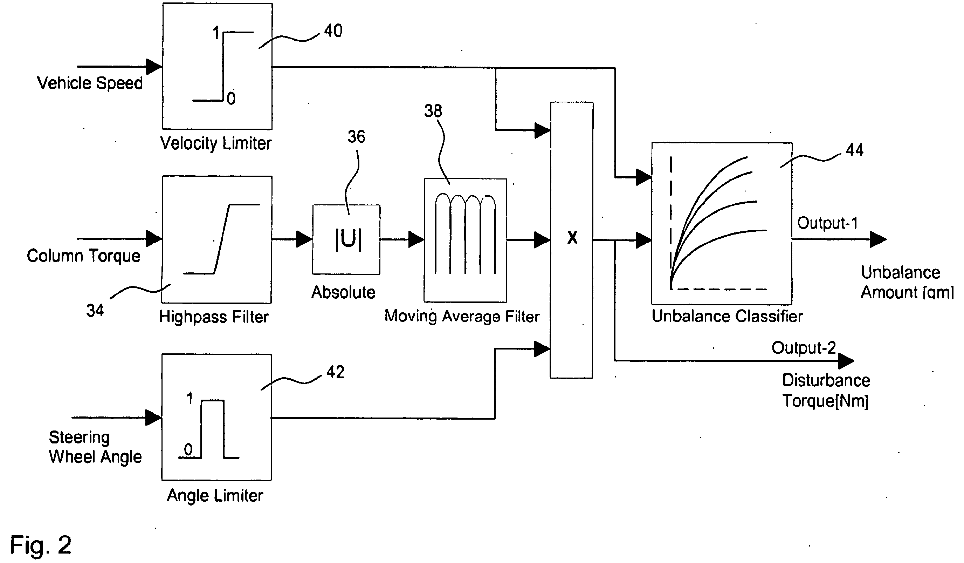

The algorithms according to preferred embodiments of the invention are illustrated in Figs. 2 to 4.

Fig. 2 shows a first embodiment of an algorithm according to the invention. The steering torque or column torque detected by the torque sensor 18 according to Fig. 1 is an input for the algorithm according to Fig. 2. The steering torque signal is filtered by means of a highpass filter 34 to mask out frequencies below a predetermined threshold, for example below 8 Hz, which are not relevant for the determination of the nibble phenomenon. The filtered steering torque signal is provided to absolute value generating means 36, having an algorithm that generates an absolute value out of each sample of the filtered torque signal. The absolute values of the filtered torque signal are provided to a moving average filter 38, which moving average filter 38 generates an average value of a group of m values, wherein m is the size of the moving average filter. With each new maximum value being provided to the averaging module 38, the oldest value in the averaging module 38 is not taken any longer into account. The output of the averaging module 38 is an averaged torque value based on a number of m samples.

Other inputs for the algorithm according to Fig. 2 are the vehicle speed signal determined by the vehicle speed sensor 28 and the steering wheel angle determined by the steering wheel angle sensor 30. The signals of the sensors 28 and 30 are filtered by means of digital filters 40, 42. The digital filter 40 for the velocity signal outputs a logical "high" or "1", if the velocity is above a preset threshold, hence vibrations occurring in a velocity range below the threshold are assumed to be irrelevant for the nibble determination. The digital filter 42 for the steering wheel angle signal outputs a logical "high" or "1", if the steering wheel angle is below a preset threshold, hence vibrations occurring in a steering wheel angle range above the threshold are assumed to be irrelevant for the nibble determination.

As a result, a multiplication of the averaged torque value with the output signals of the digital filters 40, 42 solely provides a signal different form zero, if the velocity is above the preset threshold and the steering wheel angle is below the preset threshold. If both digital filters 40, 42 provide logical "high" signals, the computed averaged torque value is input in an unbalance classifier 44 and an unbalance amount is determined and output for further processing in the ECU 20. In parallel, the result of the multiplication procedure, the disturbance torque, can be utilized for other purposes, e.g. for being displayed to the driver.

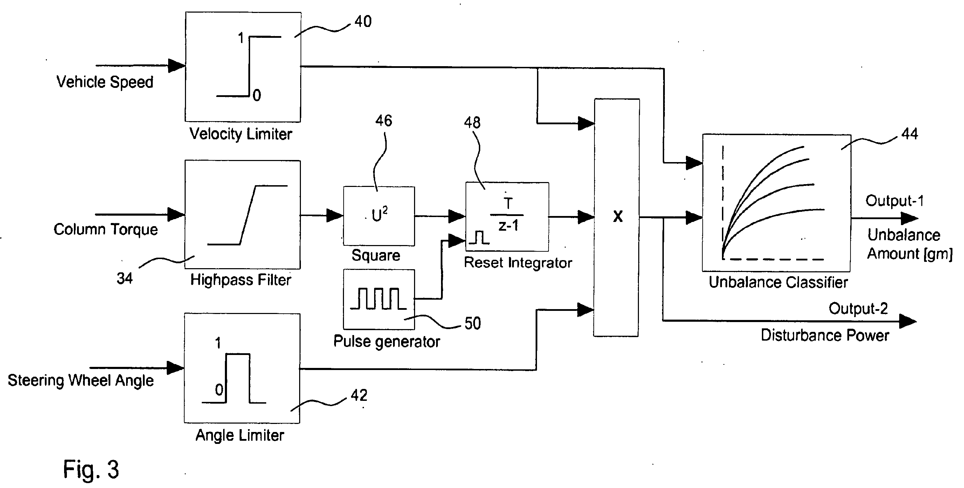

According to Fig. 3, the algorithm according to the second embodiment of the invention is provided with the same input signals as the algorithm according to Fig. 2. The filtered steering torque signal is provided to integration means 46 and 48, controlled by a signal-generator 50 providing a square-wave oscillation. By integration according to the equation:

$$P_{Tcol} = \frac{1}{\tau} \int_0^\tau x^2 \, dt$$

the power of the disturbance force signal is determined.

The integration interval includes the values of the filtered torque signal within the timeframe from 0 to $\tau$, wherein T is determined by half of the period of the oscillation frequency provided by the signal generator 50.

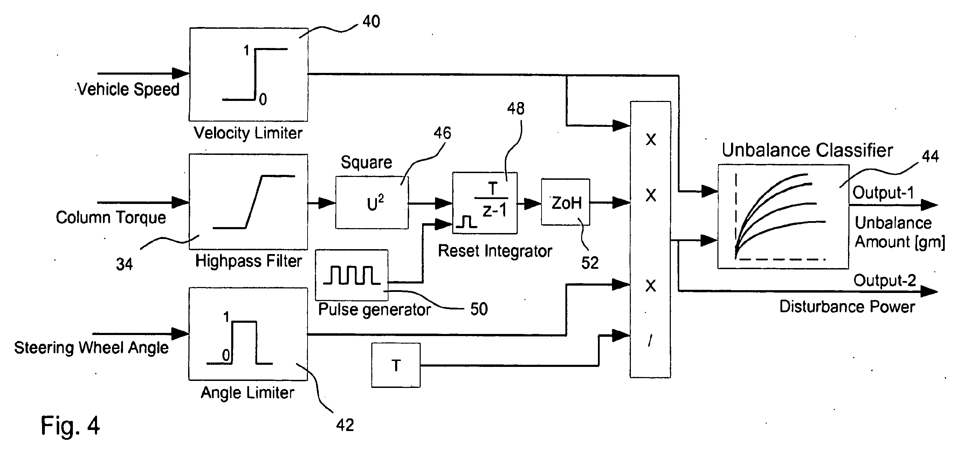

The algorithm according to Fig. 4 is a modification of the algorithm according to Fig. 3, wherein the frequency provided by the signal generator is higher than 0,5 Hz and hence the timeframe for $\tau$ is smaller than 1 second. To avoid an unstable signal input for the unbalance classifier 44, the integration result is provided to zero-order-means 52, which zero-order-means 52 stabilize the signal output by holding each sample value for one sample interval. For the compensation of the effects of the zero-order-means 52, the output signal is divided by the sample period $\tau$, illustrated in Fig. 4 as input signal T for the determination of the disturbance power.

A multiplication of the disturbance power value with the output signals of the digital filters 40, 42 solely provides a signal different form zero, if the velocity is above the preset threshold and the steering wheel angle is below the preset threshold. If both digital filters 40, 42 provide logical "high" signals, the computed disturbance power value is input in the unbalance classifier 44 and an unbalance amount is determined and output for further processing in the ECU 20. In parallel, the result of the multiplication procedure, the disturbance power, can be utilized for other purposes, e.g. for being displayed to the driver or for workshop diagnosis to identify the amount of unbalance in the front wheels.

**Claims**

1. A method for operating an electric power steering system having an electronic control unit (20) for controlling of an electric power applied to an electric motor (22), which electric motor (22) generates assist torque for assisting steering of a steering wheel (10), said assist torque being computed by means of an algorithm, which algorithm comprises the steps of:

   - determination of a disturbance force signal related to internal and/or external forces acting on the electric power steering system,
   - determination of a vehicle velocity,
   - determination of a steering wheel angle,
   - computation of a disturbance torque or a disturbance power, with the input signals: steering wheel angle signal, vehicle velocity signal and modified disturbance force signal, which is computed from the disturbance force signal being filtered by a highpass-filter (34), having a lower cut-off frequency of at least 5 Hz,
   - provision of the vehicle velocity signal and the disturbance torque or disturbance power to classification means for the determination of an unbalance amount,
   - at least partial compensation of the external forces by application of electric power to the electric motor (22) in accordance with the calculated disturbance torque or disturbance power and the unbalance amount and/or indication of the unbalance amount to the driver.

2. The method according to claim 1, **characterized in that** the disturbance force signal is filtered by a highpass-filter (34), having a lower cut-off frequency of at least 8 Hz, in particular at least 10 Hz.

3. The method according to claim 1 or 2, **characterized in that** the vehicle velocity signal is filtered by digital filter means (40), preferably a digital bandpass filter, in particular a digital highpass-filter, having a lower cut-off limitation corresponding to 60 kilometres per hour and providing a logical output signal.

4. The method according to one of the preceding claims, **characterized in that** the steering wheel angle is filtered by digital filter means (42), preferably a digital lowpass-filter, having an upper cut-off limitation corresponding to 10 - 20 degrees and providing a logical output signal.

5. The method according to one of the preceding claims, **characterized in that** the filtered disturbance force signal is provided to averaging means (38) to compute an averaged disturbance force signal, which averaging means using the equation:

$$y(n) = \frac{1}{m} \sum_{k=0}^{k=m-1} x(n-k)$$

where m is the size of the moving average filter; n is the signal index; k is the counter; x is the input signal and y is the output signal.

6. The method according to claim 5, **characterized in that** the filtered disturbance force signal is provided to the averaging means after passing absolute value generating means (36).

7. The method according to one of claims 1 to 4, **characterized in that** the power of the disturbance force signal, in particular the power of the filtered disturbance force signal, is determined.

8. The method according to claim 7, **characterized in that**

the equation:

$$P_{Tcol} = \frac{1}{\tau}\int\limits_{0}^{\tau} x^2 dt$$

is used for the determination of the power of the disturbance force signal, in particular the power of the filtered disturbance force signal, wherein $\tau$ is a predetermined timeframe.

9. The method according to claim 8,
   **characterized in that**
   $\tau$ is determined by the period of an oscillation, in particular by the period of a square-wave oscillation, generated by means of a signal generator (50).

10. The method according to claim 8 or 9,
    **characterized in that**
    the computed power of the disturbance force signal is provided to a zero-order-hold algorithm (52), in particular serving as a digital-analogue-converter.

11. The method according to one of the preceding claims,
    **characterized in that**
    an input signal for an unbalance-amount look-up table (44) or unbalance-amount algorithm is computed by multiplication of the output of the digital filter (40) for the vehicle velocity, the output of the digital filter (42) for the steering wheel angle and the averaged disturbance force signal according to one of the claims 5 to 7 or the power of the disturbance force signal according to one of the claims 8 or 9.

12. The method according to claim 10,
    **characterized in that**
    an input signal for an unbalance-amount look-up table (44) or unbalance-amount algorithm is computed by multiplication of the output of the digital filter (40) for the vehicle velocity, the output of the digital filter (42) for the steering wheel angle and the power of the disturbance force signal according to claim 10 and dividing the result with $\tau$.

13. An electronic control (20) unit for an electric power steering system, which electronic control unit is programmed to execute the method according to one of the claims 1 to 12.

14. An electric power steering system comprising an electronic control unit according (20) to claim 13.

**Patentansprüche**

1. Verfahren zum Betreiben eines elektrischen Servolenksystems, das eine elektronische Steuereinheit (20) zum Steuern von elektrischer Energie hat, die auf einen Elektromotor (22) angewendet wird, wobei dieser Elektromotor (22) ein Unterstützungsdrehmoment zum Unterstützen des Lenkens eines Lenkrades (10) erzeugt, wobei das Unterstützungsdrehmoment mittels eines Algorithmus berechnet wird, wobei dieser Algorithmus die folgenden Schritte umfasst:

   - Bestimmen eines Störkraftsignals, das sich auf interne und/oder externe Kräfte bezieht, die auf das elektrische Servolenksystem einwirken,
   - Bestimmen einer Fahrzeuggeschwindigkeit,
   - Bestimmen eines Lenkradwinkels,
   - Berechnen eines Stördrehmoments oder einer Störenergie, mit den Eingangssignalen: Lenkradwinkelsignal, Fahrzeuggeschwindigkeitssignal und modifiziertes Störkraftsignal, das aus dem Störkraftsignal berechnet wird, welches durch ein Hochpassfilter (34) gefiltert ist, das eine untere Grenzfrequenz von mindestens 5 Hz hat,
   - Bereitstellen des Fahrzeuggeschwindigkeitssignals und des Stördrehmoments oder der Störenergie für Klassifikationsmittel zur Bestimmung einer Ungleichgewichtsgröße,
   - zumindest teilweise Kompensation der externen Kräfte durch Anwenden von elektrischer Energie auf den Elektromotor (22) in Übereinstimmung mit dem berechneten Stördrehmoment oder der Störenergie und der Ungleichgewichtsgröße und/oder Anzeige der Ungleichgewichtsgröße für den Fahrer.

2. Verfahren nach Anspruch 1,
   **dadurch gekennzeichnet, dass**
   das Störkraftsignal durch ein Hochpassfilter (34) gefiltert wird, dass eine untere Grenzfrequenz von mindestens 8 Hz, insbesondere mindestens 10 Hz hat.

3. Verfahren nach Anspruch 1 oder 2,
   **dadurch gekennzeichnet, dass**
   das Fahrzeug-Geschwindigkeitssignal durch Digitalfiltermittel (40) gefiltert wird, vorzugsweise ein digitales Bandpassfilter, insbesondere ein digitales Hochpassfilter, das eine untere Cut-off-Begrenzung hat, die 60 km/h entspricht und ein logisches Ausgangssignal bereitstellt.

4. Verfahren nach einem der vorherigen Ansprüche,
   **dadurch gekennzeichnet, dass**
   der Lenkradwinkel durch Digitalfiltermittel (42) gefiltert wird, vorzugsweise ein digitales Tiefpassfilter, das eine obere Cut-off-Begrenzung hat, die 10 bis 20 Grad entspricht und ein logisches Ausgangssignal bereitstellt.

5. Verfahren nach einem der vorherigen Ansprüche,

**dadurch gekennzeichnet, dass**
das gefilterte Störkraftsignal dem Mittelungsmittel (38) zugeführt wird, um ein gemitteltes Störkraftsignal zu berechnen, wobei das Mittelungsmittel die folgende Gleichung verwendet:

$$y(n) = \frac{1}{m} \sum_{k=0}^{k=m-1} x(n-k)$$

wobei m die Größe des Filters mit gleitendem Mittelwert ist; n der Signalindex ist; k der Zähler ist; x das Eingangssignal und y das Ausgangssignal ist.

6. Verfahren nach Anspruch 5,
**dadurch gekennzeichnet, dass**
das gefilterte Störkraftsignal dem Mittelungsmittel zugeführt wird, nachdem es das Mittel zum Erzeugen eines Absolutwertes (36) durchlaufen hat.

7. Verfahren nach einem der Ansprüche 1 bis 4,
**dadurch gekennzeichnet, dass**
die Energie des Störkraftsignals, insbesondere die Energie des gefilterten Störkraftsignals, bestimmt wird.

8. Verfahren nach Anspruch 7,
**dadurch gekennzeichnet, dass**
die Gleichung:

$$P_{Tcol} = \frac{1}{\tau} \int_0^\tau x^2 dt$$

verwendet wird für die Bestimmung der Energie des Störkraftsignals, insbesondere die Energie des gefilterten Störkraftsignals, wobei τ ein vorgegebener Zeitrahmen ist.

9. Verfahren nach Anspruch 8,
**dadurch gekennzeichnet, dass**
τ durch die Periode einer Oszillation bestimmt wird, insbesondere durch die Periode einer Rechteckwellenoszillation, die mittels eines Signalgenerators (50) erzeugt wird.

10. Verfahren nach Anspruch 8 oder 9,
**dadurch gekennzeichnet, dass**
die berechnete Energie des Störkraftsignals einem Halte-Algorithmus (52) nullter Ordnung zugeführt wird, der insbesondere als Digital-Analog-Konverter dient.

11. Verfahren nach einem der vorherigen Ansprüche,
**dadurch gekennzeichnet, dass**
ein Eingangssignal für eine Nachschlagetabelle (44) zur Größe des Ungleichgewichts oder ein Algorithmus zur Größe des Ungleichgewichts durch Multiplizieren der Ausgabe des Digitalfilters (40) für die Fahrzeuggeschwindigkeit, die Ausgabe des Digitalfilters (42) für den Lenkradwinkel und das gemittelte Störkraftsignal gemäß einem der Ansprüche 5 bis 7 oder die Energie des Störkraftsignals gemäß einem der Ansprüche 8 oder 9 berechnet wird.

12. Verfahren nach Anspruch 10,
**dadurch gekennzeichnet, dass**
ein Eingangssignal für eine Nachschlagetabelle (44) zur Größe des Ungleichgewichts oder ein Algorithmus zur Größe des Ungleichgewichts durch Multiplizieren der Ausgabe des Digitalfilters (40) für die Fahrzeuggeschwindigkeit, die Ausgabe des Digitalfilters (42) für den Lenkradwinkel und die Energie des Störkraftsignals nach Anspruch 10 und Teilen des Ergebnisses durch τ berechnet wird.

13. Elektronische Steuerungseinheit (20) für ein elektrisches Servolenksystem, wobei die elektronische Steuerungseinheit so programmiert ist, dass sie das Verfahren nach einem der Ansprüche 1 bis 12 ausführt.

14. Elektrisches Servolenksystem, das eine elektronische Steuerungseinheit (20) nach Anspruch 13 umfasst.

**Revendications**

1. Procédé pour faire fonctionner un système de direction assistée électrique ayant une unité de commande électronique (20) pour commander une puissance électrique appliquée à un moteur électrique (22), lequel moteur électrique (22) génère un couple d'assistance pour assister la direction d'un volant (10), ledit couple d'assistance étant calculé au moyen d'un algorithme, lequel algorithme comprend les étapes de :

   - détermination d'un signal de force de perturbation lié à des forces internes et/ou externes agissant sur le système de direction assistée électrique,
   - détermination de la vitesse du véhicule,
   - détermination de l'angle du volant,
   - calcul d'un couple de perturbation ou d'une puissance de perturbation, avec les signaux d'entrée suivants : signal d'angle de volant, signal de vitesse de véhicule et signal de force de perturbation modifié, qui est calculé à partir du signal de force de perturbation filtré par un filtre passe-haut (34), ayant une fréquence de coupure inférieure d'au moins 5 Hz,
   - fourniture du signal de vitesse de véhicule et du couple de perturbation ou de la puissance de perturbation à des moyens de classification pour la détermination d'une quantité de déséquilibre,
- compensation au moins partielle des forces externes par application d'énergie électrique au moteur électrique (22) en fonction du couple de perturbation calculé ou de la puissance de perturbation calculée et de la quantité de déséquilibre et/ou d'une indication de la quantité de déséquilibre au conducteur.

2. Procédé selon la revendication 1, **caractérisé en ce que** le signal de force de perturbation est filtré par un filtre passe-haut (34) ayant une fréquence de coupure inférieure d'au moins 8 Hz, en particulier d'au moins 10 Hz.

3. Procédé selon la revendication 1 ou 2, **caractérisé en ce que** le signal de vitesse de véhicule est filtré par un moyen formant filtre numérique (40), de préférence un filtre passe-bande numérique, en particulier un filtre passe-haut numérique, ayant une limitation de coupure inférieure correspondant à 60 kilomètres par heure et fournissant un signal de sortie logique.

4. Procédé selon l'une des revendications précédentes, **caractérisé en ce que** l'angle du volant est filtré par un moyen formant filtre numérique (42), de préférence un filtre passe-bas numérique, ayant une limitation de coupure supérieure correspondant à 10-20 degrés et fournissant un signal de sortie logique.

5. Procédé selon l'une des revendications précédentes, **caractérisé en ce que** le signal de force de perturbation filtré est fourni à un moyen de moyenne (38) pour qu'il calcule un signal de force de perturbation moyen, lequel moyen de moyenne utilisant l'équation :

$$y(n) = \frac{1}{m} \sum_{k=0}^{k=m-1} x(n-k)$$

dans laquelle m est la taille du filtre de moyenne mobile ; n est l'indice de signal ; k est le compteur ; x est le signal d'entrée et y est le signal de sortie.

6. Procédé selon la revendication 5, **caractérisé en ce que** le signal de force de perturbation filtré est fourni au moyen de moyenne après avoir passé un moyen de génération de valeur absolue (36).

7. Procédé selon l'une des revendications 1 à 4, **caractérisé en ce que** la puissance du signal de force de perturbation, en particulier la puissance du signal de force de perturbation filtré, est déterminée.

8. Procédé selon la revendication 7, **caractérisé en ce que** l'équation :

$$P_{Tcol} = \frac{1}{\tau} \int_0^{\tau} x^2 \, dt$$

est utilisée pour la détermination de la puissance du signal de force de perturbation, en particulier de la puissance du signal de force de perturbation filtré, où $\tau$ est une période de temps prédéterminée.

9. Procédé selon la revendication 8, **caractérisé en ce que** $\tau$ est déterminée par la période d'une oscillation, en particulier par la période d'une oscillation d'onde carrée, générée au moyen d'un générateur de signal (50).

10. Procédé selon la revendication 8 ou 9, **caractérisé en ce que** la puissance calculée du signal de force de perturbation est fournie à un algorithme bloqueur d'ordre zéro (52), servant en particulier de convertisseur numérique-analogique.

11. Procédé selon l'une des revendications précédentes, **caractérisé en ce qu'**un signal d'entrée pour une table de conversion de quantité de déséquilibre (44) ou un algorithme de quantité de déséquilibre est calculé par multiplication de la sortie du filtre numérique (40) pour la vitesse du véhicule, de la sortie du filtre numérique (42) pour l'angle du volant et du signal de force de perturbation moyen selon l'une des revendications 5 à 7 ou de la puissance du signal de force de perturbation selon l'une des revendications 8 et 9.

12. Procédé selon la revendication 10, **caractérisé en ce qu'**un signal d'entrée pour une table de conversion de quantité de déséquilibre (44) ou un algorithme de quantité de déséquilibre est calculé par multiplication de la sortie du filtre numérique (40) pour la vitesse du véhicule, de la sortie du filtre numérique (42) pour l'angle du volant et de la puissance du signal de force de perturbation selon la revendication 10, et division du résultat par $\tau$.

13. Unité de commande électronique (20) pour un système de direction assistée électrique, laquelle unité de commande électronique est programmée pour exécuter le procédé de l'une quelconque des revendications 1 à 12.

14. Système de direction assistée électrique comprenant une unité de commande électronique (20) selon la revendication 13.

Fig. 1

Fig. 2

EP 2 030 868 B1

Fig. 3

Fig. 4

Vehicle Speed — Velocity Limiter (40)

Column Torque — Highpass Filter (34)

Steering Wheel Angle — Angle Limiter (42)

Square $U^2$ (46)

Reset Integrator $\frac{T}{z-1}$ (48)

ZoH (52)

Pulse generator (50)

T

Unbalance Classifier (44)

Output-1 — Unbalance Amount [gm]

Output-2 — Disturbance Power

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6742620 B2
- US 6134490 A
- DE 19906300 A1
- EP 2028080 A1
- EP 20145378 A2